(19) Europäisches Patentamt
European Patent Office
Office européen des brevets

(11) **EP 1 837 105 A1**

(12) **EUROPEAN PATENT APPLICATION**
published in accordance with Art. 158(3) EPC

(43) Date of publication:
**26.09.2007 Bulletin 2007/39**

(51) Int Cl.:
**B23B 27/14** (2006.01)          **B23C 5/16** (2006.01)
**C04B 35/584** (2006.01)          **C04B 35/599** (2006.01)

(21) Application number: **05820104.7**

(22) Date of filing: **22.12.2005**

(86) International application number:
**PCT/JP2005/023589**

(87) International publication number:
**WO 2006/068220 (29.06.2006 Gazette 2006/26)**

(84) Designated Contracting States:
**DE FR SE**

(30) Priority: **22.12.2004 JP 2004372004**
**22.12.2004 JP 2004372005**
**02.05.2005 JP 2005134157**
**08.11.2005 JP 2005324180**

(71) Applicant: **NGK Sparkplug Co., Ltd.**
**Nagoya**
**Aichi (JP)**

(72) Inventors:
• **ABUKAWA, Kohei**
  **4850013 (JP)**
• **TOYODA, Ryoji**
  **4850081 (JP)**
• **KOMURA, Atsushi**
  **4520001 (JP)**

(74) Representative: **Leidescher, Thomas**
**Zimmermann & Partner**
**Postfach 33 09 20**
**80069 München (DE)**

(54) **SIALON INSERT AND CUTTING TOOL EQUIPPED THEREWITH**

(57)     This invention provides a long-life Sialon insert, the cutting edge of which is resistant to wear and hard to fracture, and a cutting tool equipped with the Sialon insert.

Provided are a Sialon insert made of a Sialon sintered body including a Sialon phase comprising an $\alpha$-Sialon and a $\beta$-Sialon, and at least one element, originating from a sintering aid, selected from the group consisting of Sc, Y, Dy, Yb, and Lu in an amount of 0.5 to 5 mol% in terms of an oxide thereof, wherein an $\alpha$-value, which shows the proportion of the $\alpha$-Sialon in the Sialon phase, is from 10% to 40%; the $\beta$-Sialon has a value of Z from 0.2 to 0.7 wherein Z is a variable of the formula $Si_{6-Z}Al_ZO_ZN_{8-Z}$ and within a range: $0 < Z \leq 4.2$; and the sintered body has an average thermal expansion coefficient of $3.5 \times 10^{-6}$/K or less at temperatures of room temperature to 1000°C, and a thermal conductivity of 10 W/m$\square$K or more at temperatures of room temperature to 1000°C, and a cutting tool comprising a holder equipped with the Sialon insert.

**Description**

TECHNICAL FIELD

The present invention relates to a Sialon insert and a cutting tool equipped with at least one Sialon insert. In more particular, the present invention relates to a Sialon insert, the cutting edge of which is resistant to wear and hard to fracture, which provides the insert with a long life, and a cutting tool equipped with the Sialon insert.

BACKGROUND ART

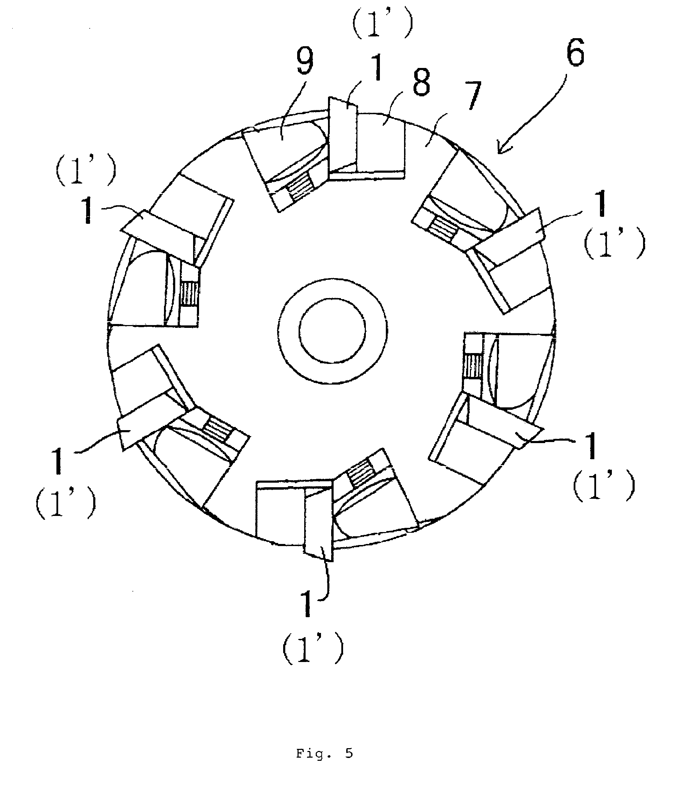

Cutting tools typically have a support, called a holder, such as a holder 2 of a cutting tool for working outer peripheral faces shown in Figure 2 or a holder for a milling cutter shown in Figure 5, and at least one insert, which is a disposable cutting edge that is of tencalled "throw away tip" or "edge-changing insert", fixed to an end of the support. Materials for the insert are chosen, depending on kinds of workpieces, cutting processes, and cutting speeds. Examples of the materials are cemented carbides, cermets, ceramics, or CBNs, or these materials, the surfaces of which are coated with films. Among them, inserts made of silicon-nitride ceramics are said to be appropriate for rough cutting of gray cast iron, which may be abbreviated to "FC", especially for high-speed cutting of it.

Sialon is recognized as a material that has more excellent hardness, exhibits higher strength from room temperature to a high temperature, and has higher chemical stability than silicon nitride. Because of these properties, Sialon has often been used as a structural material of rolling guide rolls and dies for heated steel and sleeves of die-casting machines for aluminum, etc. Furthermore, because Sialon is recognized as a material with excellent wear resistance, the skilled artisan thought that it would be possible to use Sialon for cutting tools and bearings. In actuality, however, Sialon cutting tools were used only for rough-cutting heat-resistant alloy that is difficult to cut. The wear resistance of the cutting edge of the Sialon insert, which affects the roughness of the surface of a cut material and the dimensional accuracy of the cut material, has not been considered seriously.

In recent years, the weight saving of vehicle materials including FC materials as a most used material has been a big problem to improve the fuel consumption rate of the vehicles. In these circumstances, a demand for the thinning and the weight saving of vehicle components has been increased, and high-accuracy cutting has been demanded even for rough cutting. Conventionally, rough cutting of such FC materials has been done typically with cutting tools made of silicon nitride. Silicon nitride is a covalent bonding material, and the defect is that silicon nitride is prone to decompose into silicon atoms and nitrogen atoms under a high temperature caused by high-speed cutting. The decomposition of silicon nitride is caused and accelerated by the reaction due to the contact between silicon nitride and iron and carbon, which are main components of the FC materials, at a high contact pressure. The decomposition of silicon nitride in the cutting edge of an insert leads to wear of and damage to the cutting edge. The wear of the cutting edge results in deterioration in the roughness of the surface and the dimensional accuracy of the workpiece. Finally, it becomes impossible to further use the tool, which means that the life of the tool has expired.

As explained above, people skilled in the art consider that the wear of and damage to the cutting edge is mainly due to chemical wear caused by the chemical reaction between the cutting edge of the tool and the workpiece. One known method to control the chemical wear is to employ a β-Sialon with a large Z value to decrease the damage due to the adhesion between the workpiece and the cutting edge. See patent documents 1-4. Researches made by the inventors of the present application revealed that the strength of the cutting edge of the tool decreases as the Z value increases, although the employment of such β-Sialons is certainly capable of controlling the adhesion between the workpiece and the cutting edge of the tool. Therefore the inventors judged that β-Sialons with a large Z value were not appropriate for tools for rough-cutting heat-resistant alloy. Besides, it was found out that the material was liable to cause abrasive wear, and growth of the abrasive wear, in turn, caused chipping-off of the cutting edge of the tool. The Z value is calculated from the difference between the lattice constant of the a axis of β-Sialon in the Sialon sintered body and that of the a axis of β-silicon nitride, which is 7. 60442 Å, measured through X-ray diffraction. For the method of the calculation, see, for example, patent document 5.

Patent Document 1: U.S. No. 4323323
Patent Document 2: JP 10-36174 A
Patent Document 3: Japanese Patent No. 2824701 (JP 6-510965 T)
Patent Document 4: Japanese Patent No. 3266200 (JP 2-275763 A)
Patent Document 5: Paragraph 0078 of JP 2004-527434 JP

Another known method of controlling the chemical reaction between the insert material and the workpiece is to coat the surface of the insert with a hard layer formed from titanium compounds and/or aluminum compounds having low reactivity with iron. To cut FC materials using inserts coated with titanium compounds, such as titanium nitride and titanium carbide, and aluminum compounds, such as alumina, is taught in patent documents 6, 7, and 8. Furthermore, a method of lowering the chemical reactivity of the insert material *per* se by adding titanium nitride to silicon nitride is known. The titanium nitride exists in the form of particles dispersed in the matrix of the insert material to improve the resistance to chemical reactions. This is disclosed in, for example, patent documents 2, 3, 5, 9, and 10. Also known is a method of adding aluminum in the form of alumina or aluminum nitride to the material. Alumina is dissolved into silicon nitride grains, or incorporated into siliconnitride crystal lattices, which produces a solid solution named Sialon. Sialon has an improved chemical resistance compared with silicon nitride. The addition of alumina to silicon nitride is disclosed in patent documents 3, 2, and 5, and other documents.

Patent Document 6: Japanese Patent No. 3107168
Patent Document 7: JP 2002-192404 A
Patent Document 8: JP 2002-284589 A
Patent Document 9: JP 11-335168 A
Patent Document 10: JP 2000-143351 A
Patent Document 11: U.S. No. 5525134
Patent Document 12: JP 2002-192403 A

In addition to the above-mentioned is known a method of coating the silicon nitride insert material with a hard layer of substances having low reactivity with iron and carbon, such as titanium compounds and/or aluminum compounds, to reduce damage resulting from the adhesion between the workpiece and the silicon nitride insert material. To cut gray cast iron or ductile iron articles with inserts made of the silicon nitride material coated with titanium nitride or aluminum oxide is disclosed in documents, such as patent documents 11, 8, and 12. However, the addition of titanium nitride or aluminum oxide is prone to cause deterioration in the strength. More specifically, the addition of the former is liable to lower the strength at high temperatures due to the difference between the thermal expansion coefficient of titanium nitride and that of silicon nitride. On the other hand, the addition of the latter is liable to reduce the strength because the addition changes silicon nitride to the Sialon. Therefore it was difficult to balance the properties of the insert material. The skilled art is an had difficulty in producing tools with a sufficiently long life especially when the tools were used to cut materials difficult to cut, such as ductile iron, at a high speed.

DISCLOSURE OF THE INVENTION

[Problems to be Solved by the Invention]

The inventors of the present invention found out the following things as a result of their study. When the insert made of a material with its surface coated with a hard layer, as described above, is employed, wear due to the chemical reaction between the workpiece and the material of the insert of the cutting tool is reduced. On the other hand, residual tensile stress is generated in the coating layer due to the difference between the thermal expansion coefficient of the silicon nitride insert material and that of titanium nitride or alumina. Then, starting from the coating layer, the cutting edge of the insert may break and chip off, which shortens the life of the tool. Also, although the addition of titanium nitride controls the chemical reaction between the cast iron and silicon nitride, the large difference between the thermal expansion coefficient of titanium nitride and that of silicon nitride may sometimes create stress in the interface between the silicon nitride grains and the titanium nitride grains, which possibly leads to break of the insert *per* se especially when a high-speed cutting is carried out with the insert. Besides, a simple addition of an aluminum compound cannot achieve the dissolution of the aluminum compound into the silicon nitride grains, and the compound is left in the grain boundary in the form of a crystal phase or a glass phase, which is prone to cause deterioration in the properties at high temperatures and to sustain mechanical wear and damage. If the aluminum compound is not completely dissolved into the silicon nitride grains to form a solid solution and left in the grain boundary, the insert material will be a material with a large thermal expansion compared with silicon nitride, which makes it difficult to obtain sufficient resistance to thermalshock. In addition, as an evil influence of the formation of the Sialon, the thermal conductivity often decreases considerably.
In order to solve the aforementioned problems, the objective of the present invention is to reduce the wear due to the chemical reaction between the workpiece and the insert, and the abrasive mechanical wear, without sacrificing the strength of the insert material, and to provide a Sialon insert with a long life.
Another objective of the present invention is to solve the aforementioned problems, and to provide a Sialon insert that exhibits sufficient strength, has excellent resistance to wear, does not cause such an adhesion of the material of the workpiece to the cutting edge that the cutting edge is damaged, and has a long life, when not only articles made of gray cast iron but also those made of materials being difficult to cut, such as ductile iron, are worked at a high speed.

[Means to Solve the Problems]

The inventors of the present invention conducted intensive researches on the mechanism in which the decomposition reaction of such materials for the insert wears out the cutting edge, and found the following means to solve the problems.

The first means according to the present invention to solve the aforementioned problems is as follows.

In the first invention, the component forming the grain boundary phase of a Sialon sintered body comprises a particular element originating from a sintering aid, that is at least one element selected from the group consisting of Sc, Y, Dy, Yb, and Lu, wherein the total amount of the particular element in the Sialon sintered body is from 0.5 to 5% by mol in terms of the oxide thereof. The particular elements included in the sintering aid do not essentially disappear when the powdery raw materials to produce the Sialon sintered body are sintered, and are dissolved into the Sialon sintered body.

(1) A Sialon insert made of a Sialon sintered body including a Sialon phase comprising an α-Sialon and a β-Sialon, and at least one element, originating from a sintering aid, selected from the group consisting of Sc, Y, Dy, Yb, and Lu in an amount of 0.5 to 5 mol% in terms of an oxide thereof, wherein an α-value, which shows the proportion of the α-Sialon in the Sialon phase, is from 10% to 40%; the β-Sialon has a value of Z from 0.2 to 0.7 wherein Z is a variable of the formula $Si_{6-Z}Al_ZO_ZN_{8-Z}$ $(0<Z\leq4.2)$ ; and the sintered body has an average thermal expansion coefficient of $3.5 \times 10^{-6}$/K or less at temperatures of room temperature to 1000°C, and a thermal conductivity of 10 W/m□ K or more at temperatures of room temperature to 1000°C.

(2) The Sialon insert according to item (1), wherein the Sialon sintered body has a three-point bending strength of 1000 MPa or more at room temperature.

(3) The Sialon insert according to item (1) or (2), wherein the Sialon sintered body has a three-point bending strength of 900 MPa or more at a temperature of 1000°C.

The second means according to the present invention to solve the aforementioned problems is as follows.

In the second invention, the amount of the grain boundary phase included in the Sialon sintered body is limited by the ratio of the area of the grain boundary phase included in a section taken by cutting the body by a plane, to the area of the section.

(4) A Sialon insert made of a Sialon sintered body including a grain boundary phase, the amount of which is such that the ratio of an area of the grain boundary phase in a section of the Sialon sintered body to an area of the section is from 5 to 20%, wherein an α-value, which shows the proportion of an α-Sialon in a Sialon phase, is 40% or less; a β-Sialon has a value of Z from 0.2 to 1.0 wherein Z is a variable of the formula $Si_{6-Z}Al_ZO_ZN_{8-Z}$; and the proportion of aluminum A included in the solid solution is 70% or more wherein the proportion A is defined by the formula [(a measured value of Z of the β-Sialon)/(a theoretical value of Z calculated from the composition of the sintered body)].

(5) The Sialon insert according to item (4), wherein the sintered body includes at least one element selected from the group consisting of Sc, Y, Ce, Er, Dy, Yb, and Lu in an amount of 0.5 to 10 mol% in terms of the oxides thereof.

(6) The Sialon insert according to item (4) or (5), wherein the sintered body includes at least one hard component selected from the group consisting of titanium carbide, titaniumnitride, and titanium carbonitride in an amount of 30 mol% or less.

The third means according to the present invention to solve the aforementioned problems is as follows.

(7) A Sialon insert made of a Sialon including a Sialon phase comprising an α-Sialon phase and a β-Sialon phase, and a grain boundary phase that presents a glass phase and/or a crystal phase, wherein the β-Sialon phase, represented by the formula $Si_{6-Z}Al_ZO_ZN_{8-Z}$, has a value of Z from 0.2 to 1; an α-value, which shows the proportion of the α-Sialon phase in the Sialon phase, is from 10% to 40%; and the Sialon phase includes at least one rare earth element selected from the group consisting of Sc, Y, Dy, Yb, and Lu in a total amount of 2 to 5 mol% in terms of oxides thereof, and from 30 to 50 mol% of the rare earth element is present in the $\alpha$-Sialon phase.
(7) The Sialon insert according to item (6), wherein the Sialon phase includes at least one hard component selected from the group consisting of titanium carbide, titanium nitride, and titanium carbonitride in an amount of 30 mol% or less.

The fourth means according to the present invention to solve the aforementioned problems is as follows.
(8) A cutting tool comprising a holder equipped with the Sialon insert according to any one of items (1)-(7).

[Advantages of the Invention]

The insert according to the first invention is made of a Sialon. They not only have the cutting edge with high strength but also make it possible to control decomposition and wear due to the chemical reaction between the workpiece and the insert material of the tool. They are also able to control mechanical damage, a typical example of which is abrasive wear that often happens when Sialon is employed as the material for cutting tools, and substantially prolong the life of the tools. The Sialon insert especially according to the first invention and the cutting tool employing this insert according to the fourth invention are able to work materials difficult to cut, such as ductile iron and heat-resistant alloy, as well as normal gray cast iron, at a high speed, with the cutting edges worn and chipped off little, which imparts a prolonged life to the insert and tool. When they are used for rough cutting, they are excellent in the wear resistance of the cutting edges of the tool, which affects the roughness of the surface and the dimensional accuracy of the workpiece, and able to continue cutting for a long time with keeping the roughness and the accuracy within preferable ranges.
The insert according to the second invention is made of a Sialon. They not only have the cutting edge with high strength but also make it possible to control decomposition and wear due to the chemical reaction between the workpiece and the insert material of the tool. Also, by limiting the proportion of the dissolved aluminum A in the solid solution, mechanical damage, a typical example of which is abrasive wear, to the cutting edges can be reduced, and the life of the tool can be prolonged substantially. The Sialon insert especially according to the second invention and the cutting tool employing this insert according to the fourth invention are best appropriate for cutting materials such as FC materials. When they are used for rough cutting, they are excellent in the wear resistance of the cutting edges of the tool, which affects the roughness of the surface and the dimensional accuracy of the workpiece, and able to continue cutting for a long time with keeping the degree and the accuracy within preferable ranges.
The insert according to the third invention is a Sialon insert with the controlled composition and structure of the sinteredbody, which is excellent in the strength and the hardness at high temperatures, and the wear resistance. Chipping off due to adhesion and the resulting damage is also controlled with the insert. Therefore the insert and the cutting tool employing this insert according to the fourth invention can enjoy a very prolonged life even when they are employed for cutting materials that are difficult to cut, as well as ordinary materials. As a result, high-speed cutting of materials that are difficult to cut, such as ductile iron and heat-resistant alloy, becomes possible, which contributes to a reduction in the cutting cost and an improvement in the cutting efficiency.

BRIEF DESCRIPTION OF THE DRAWINGS

Figure 1 is a perspective view showing an example of the insert according to the present invention.
Figure 2 is a side view showing an example of a cutting tool with a holder for working outer peripheral faces, which holder is equipped with an insert. The insert is also an example according to the present invention.
Figure 3 is a perspective view of another example of the insert according to the present invention.
Figure 4 is a front elevation showing the beveled insert of Figure 3.
Figure 5 is a plan view of a cutting tool with a holder for a milling cutter, which holder is equipped with the inserts, each of which is an example according to the present invention.

[Explanation of Reference Numerals]

1, 1' ... insert; 2 ... a holder of an insert for working outer peripheral faces; 3 ... cramp; 5 ... cutting edge of the insert; 6 ... milling cutter holder; 7 ... base of the milling cutter holder; 8 ... fixing member to which an insert is fixed; 9 ...

wedge member for fixing an insert

BEST MODE TO CARRY OUT THE INVENTION

The Sialon insert according to the first to third inventions is made of a sintered body comprising as a main phase a Sialon phase including a β-Sialon and an α-Sialon.

(Sialon Insert according to the First Invention)

Sialons are generally produced by sintering a powdery mixture including powdery raw materials such as silicon nitride, alumina, aluminum nitride, and silica, which provide the component elements, such as Si, Al, O, and N, together with auxiliaries such as a sintering aid. Sialons generally comprise a mixture of β-Sialons represented by the chemical formula $Si_{6-Z}Al_ZO_ZN_{8-Z}$ wherein Z is in the range of $0<Z\leq4.2$ and α-Sialons represented by the chemical formula $Mx(Si, Al)_{12}(O, N)_{16}$ wherein X is in the range of $0<X\leq2$ and M denotes an interstitial element in forming a solid solution, such as Ca, Sc, Y, Dy, Er, Yb, and Lu. β-Sialons have high toughness because they have a structure of entangled needles. On the other hand, α-Sialons have high hardness because the granules there of are in the shape of equi-axed crystals, although the toughness there of is lower than β-Sialons.

The grain boundary between Sialon grains has a glass phase and a crystal phase. When the powdery mixture is sintered, the sintering aid, together with silicon nitride and silica components included as impurity in the silicon nitride, turns into a liquid phase, and contributes to the formation of Sialon grains, the rearrangement of the Sialon grains, the growth of the grains, and the densification. After the contribution, the liquid phase solidifies when cooled, to a glass phase or a crystal phase that serves as a grain boundary phase formed in the Sialon grain boundary. Compared with the Sialon grains, the grain boundary phase has a low melting point, low toughness, and low hardness. Therefore in order to improve the heat resistance, toughness, and hardness of the Sialon sintered body, the amount of the grain boundary phase has to be so controlled that it will not exceed a certain amount. The control of the Sialon grain phase and the grain boundary phase requires the control of the amount of the sintering aid.

Based on the discussion in the preceding paragraph, the Sialon insert according to the first invention includes a rare-earth element that is used as a sintering aid, preferably at least one element selected from the group consisting of Sc, Y, Dy, Yb, and Lu in an amount of 0.5 to 5 mol% in terms of the oxide thereof in the Sialon sintered body. In other words, the powdery raw material to prepare a Sialon sintered body in the production of a Sialon insert includes from 0.5 to 5% by mole of the oxide of the rare-earth element mentioned above. By limiting the kind and amount of the elements that contribute to making the Sialon structure in the shape of needles, the Sialon sintered body is controlled to the one with a preferable Sialon structure. When less than 0.5% by mole of the sintering aid is used, the Sialon structure does not take a form of needles sufficiently, which leads to deterioration in the strength of the sintered body, or may even make the densification difficult. On the other hand, more than 5 mol% of the sintering aid will lower the heat resistance, the toughness, and the hardness of the Sialon sintered body *per se*. As a result, mechanical wear and damage, typified by abrasive wear, shorten the life of the Sialon insert, which is not desirable.

The molar percentage of the amount of the oxide of the specified rare-earth elements included in the Sialon sintered body is calculated in the following way:

(a) Measure the amount of each element except non-metallic elements in the Sialon sintered body by the X-ray fluorescence analysis or the chemical analysis to calculate the proportion of the weight of each element.
(b) Regard each of the elements as the oxide or nitride thereof, and calculate the molecular weight of the compound. For example, regard Si as $Si_3N_4$, Al as $Al_2O_3$, and Y as $Y_2O_3$, and calculate the molecular weights of the compounds.
(c) Divide the proportion of each element calculated in step (a) by the corresponding molecular weight calculated in step (b). The quotient of each division means the molar proportion of the compound to the sintered body. The sum of the quotients is calculated, and the molar percent of the amount of each compound to the sum is calculated.

The Sialon insert according to the first invention has an α-value, which denotes the proportion of the α-Sialon in the Sialon grains, is from 10% to 40%. The key to a desirable Sialon sintered body for the insert is that parts of the Sialon grains are α-Sialon. When α-Sialon is produced, it dissolves the specified rare-earth elements originating from the oxides of the specified rare-earth elements added as a sintering aid into the crystal lattices thereof to form a solid solution. This structure of the α-Sialon reduces the amount of the crystal phase or the glass phase in the Sialon grain boundary, which reduces mechanical wear and damage. If the α-Sialon is not fully produced, and the elements originating from the oxides of the rare-earth elements are not sufficiently dissolved into the α-Sialon crystal lattices, the resultant sintered body includes a lot of the elements in the grain boundary, has a large thermal expansion coefficient, and cannot acquire a sufficient thermal shock resistance. The α-value, which denotes the proportion of the α-Sialon in the Sialon, can be calculated by the equation $\{(\alpha1+\alpha2)/(\beta1+\beta2+\alpha1+\alpha2)\} \times 100$, wherein β1 is the intensity ratio of the (101) diffraction peak of the β-Sialon, β2 the intensity ratio of the (210) diffraction peak of the β-Sialon, α1 the intensity ratio of the (102) diffraction peak of the α-Sialon, and α2 the intensity ratio of the (210) diffraction peak of the α-Sialon. When the α-value is less than 10%, a lot of the grain boundary phases remain in the sintered body, which lowers the wear resistance and the thermal shock resistance. On the other hand, if the α-value exceeds 40%, the body includes more equi-axed α-Sialon crystals that are inferior in toughness and prone to chip off, which is not desirable.

The β-Sialon, represented by the formula $Si_{6-Z}Al_ZO_ZN_{8-Z}$, included in the Sialon sintered body from which the Sialon insert according to the first invention is formed, has a value of Z from 0.2 to 0.7. The Sialon sintered body including the β-Sialon with a Z value within the range is capable of providing Sialon inserts that are not liable to react with the workpiece and exhibit less deterioration in the strength, compared with silicon nitride. More specifically, when the Z value is less than 0.2, the reaction between the Sialon insert and the workpiece cannot be controlled sufficiently. When the value exceeds 0.7, the strength of the Sialon insert decreases noticeably. The Z value is calculated from the difference between the lattice constant of the a axis of β-Sialon in the Sialon sintered body and that of the a axis of β-silicon nitride, which is 7.60442 Å, measured through X-ray diffraction by an ordinary method. For the method of the calculation, see patent document 5.

The Sialon sintered body in the Sialon insert according to the first invention has an average thermal expansion coefficient of not more than 3. 5 x $10^{-6}$/Kat temperatures from room temperature to 1000°C. The insert repeatedly experiences thermal expansion and thermal shrinkage due to heat produced during cutting operations. This repetition of expansion and shrinkage may sometimes cause cracks in the insert. To lower the thermal expansion coefficient is important to reduce the expansion and shrinkage of the insert caused by heat, and the occurrence and growth of cracks in the insert, and to prevent the insert from chipping off. The inventors' various researches on the compositions and amounts of the Sialon phase and the grain boundary phase revealed that the thermal expansion coefficient could be lowered when the amount of the grain boundary phase was reduced. Their further researches on the relationship between the thermal expansion coefficient and the chipping-off of the cutting edge of the insert due to cracks caused by heat showed that when the thermal expansion coefficient is larger than 3.5 x $10^{-6}$ /K, cracks due to heat are prone to occur in the Sialon insert during cutting operations, which noticeably leads to the chipping-off.
Based on these findings, the cutting edge of the Sialon insert according to the present invention can be prevented from chipping off dramatically when a Sialon sintered body with a thermal expansion coefficient smaller than the above-mentioned value is employed for the insert.

The Sialon sintered body in the Sialon insert according to the first invention has a thermal conductivity of 10 W/m□ K or more at temperatures from room temperature to 1000°C. The thermal conductivity should be high from room temperature to the high temperature, because the high thermal conductivity enables the Sialon insert to transmit heat quickly and easily, prevents the insert from being over heated, and relaxes the thermal shock effectively. If the thermal conductivity is 10 W/m□K or more, it will noticeably reduce the chipping-off of the Sialon insert due to the occurrence and growth of cracks caused by heat. The high thermal conductivity remarkably prevents the Sialon insert from chipping off, especially when the Sialon insert is employed for a high-speed cutting, which is liable to raise the temperature thereof high.

Among the Sialon sintered bodies used for the Sialon insert according to the first invention are preferred those with a three-point bending strength of 1000 MPa or more at room temperature. The three-point bending streng that room temperature may sometimes be called "room temperature strength."

When the Sialon insert according to the present invention is used for a cutting tool, the Sialon insert with the above-mentioned three-point bending strength is especially appropriate because the Sialons intered body with a larger strength is excellent in not only simple strength but also the thermal shock resistance, which makes stable cutting possible. In summary the Sialon insert with a room temperature strength of 1000 MPa or more according to the present invention provides stable working.

Among the Sialon sintered bodies for the Sialon insert according to the first invention are particularly preferred Sialon sintered bodies with a three-point bending strength of 900 MPa or more at 1000°C.

When the Sialon insert according to the present invention is used for a cutting tool, the temperature of the tool rises high because of the friction between the insert and the workpiece and other factors. Therefore as the Sialon sintered body of the present invention has a larger strength especially at high temperatures, a more stable high-speed working will be possible.

The cutting tool according to the present invention comprises a Sialon insert of the present invention and a holder that holds the insert as a throwaway tip, and the tool is used as a high-performance cutting tool. The Sialon insert and the cutting tool according to the present invention boast the cutting edge that is worn and chipped off little, which prolongs the life of the tool, especially when they are used to cut not only workpieces made of gray cast iron but also workpieces made of materials difficult to cut, such as ductile iron or heat-resistant alloy, at a high speed. Even when the tool is used for rough cutting,the cutting edge of the tool is excellent in wear resistance, which could affect the roughness of the surface and the dimensional accuracy of the workpiece, and the tool is able to continue cutting for a long time with keeping the roughness and the accuracy excellent. The cutting tool according to the present invention means cutting tools in a broad sense, or general tools of turning and milling.

A preferable method of producing the Sialon insert according to the first invention will be explained hereinafter. A powder including elements that are the components of Sialon, such as $Si_3N_4$ powder, $Al_2O_3$ powder, and AlN powder are mixed with a sintering aid, specifically a powder of the oxides of rare-earth elements, such as $SC_2O_3$ powder, $Y_2O_3$ powder, $CeO_2$ powder, $Dy_2O_3$ powder, $Er_2O_3$ powder, $Yb_2O_3$ powder, and $Lu_2O_3$ powder. Thus a powdery raw material is prepared. The powdery raw material should comprise particles with an average particle size of 10 $\mu$m or less, preferable 5 $\mu$m or less, more preferably 3 $\mu$m or less. The amounts of the respective components of the powdery raw material should be decided based on the composition of the insert after the sintering. Normally, the powdery raw material should include from 95 to 50% by mole of $Si_3N_4$ powder, from 0.5 to 20% by mole of $Al_2O_3$ powder, from 0 to 40% by mole of AlN powder, and from 0.5 to 5% by mole of the sintering aid. The prepared powdery raw material is placed in a mixing and grinding machine, such as a ball mill, or a $Si_3N_4$ pot mill with $Si_3N_4$ balls, and a liquid that does not substantially dissolve the powdery raw material, such as ethanol, is added to the material. Then, the mixture is ground and mixed for 1 to 300 hours, which produces a slurry. If the particle size of the particles comprised of the raw material is larger, the time period of grinding should be so prolonged that the mixture should be ground sufficiently.

When the slurry includes larger particles, the particles should be removed with a sieve of 200 to 500 in mesh. An organic binder, such as micro wax binders, the amount of which is from 1 to 30% by weight based on the weight of the powdery raw material, is added to the prepared slurry. The resultant is subjected to granulation by a suitable method, such as spray-drying. The obtained granulated power is pressed into a desirable shape based on the estimation of the shape of the body after the sintering. The molding can also be done by the applications of other methods, such as injection molding, extrusion molding, or casting. After the molding, the molded body is degreased. Normally, the degreasing is done in a heating device in an atmosphere of an inert gas, such as nitrogen gas. The degreasing at 400 to 800°C takes 30 to 120 minutes to complete. The degreased molded body is sintered at a temperature from 1500 to 1900°C, preferably from 1650 to 1800°C. The sintering should preferably be done in two steps. In the first step, the molded body is kept in a vessel made of an appropriate material, such as silicon carbide, boron nitride, or silicon nitride, at a temperature of 1500 to 1600 °C for about 1 to 4 hours, preferably under an Ar atmosphere, then heated to 1650 to 1800°C under 1 to 9 atmospheric pressure of nitrogen gas or Ar gas, and kept at the temperature for 1 to 5 hours. The second sintering should be done by hot isotropic pressing, which is abbreviated to HIP. For example, the molded body after subjected to the first sintering is heated for 1 to 5 hours at a temperature of 1650 to 1800°C in an atmosphere of nitrogen under a pressure of 100 to 5000 atmospheric pressure.

(Sialon Insert according to the Second Invention)

The Sialon insert according to the second invention is made of a sintered body including a Sialon phase that comprises a β-Sialon and an α-Sialon, or a Sialon phase that comprises a β-Sialon, which sintered body is prepared by adding a sintering aid to a powdery raw material and sintering the obtained mixture, in a way similar to the way in which the Sialon insert according to the first invention is prepared. The differences between the Sialon insert according to the first invention and that according to the second invention lie in the following features : the latter Sialon insert has a Sialon sintered body including a grain boundary phase, the amount of which is such that the area ratio of an area of the grain boundary phase in a section of the Sialon sintered body to an area of the section is from 5 to 20%; the α-value is 40% or less; the value of Z is from 0.2 to 1.0; and the proportion of aluminum A included in the solid solution is 70% or more, wherein the proportion A is defined by the ratio of a measured Z value of the β-Sialon in the sintered body to a theoretical Z value calculated from the composition of the sintered body, or A=(a measured Z value/a theoretical Z value)x100.

In a similar way to the way for the first invention, the Sialons for the second invention are prepared by adding auxiliaries such as a sintering aid to a powdery raw material comprising materials such as silicon nitride, alumina, aluminum nitride, and silica that include component elements such as Si, Al, O, and N, and sintering the resultant mixture. In the Sialons intered body according to the second invention normally exist, as Sialon, a β-Sialon represented by the chemical formula $Si_{6-Z}Al_ZO_ZN_{8-Z}$ wherein Z is more than zero and not more than 4.2, or $0<Z\leq4.2$, and an α-Sialon represented by the chemical formula $Mx (Si,Al)_{12}(O, N)_{16}$ wherein X is more than zero and not more than 2, or $0<X\leq2$, and M represents an element interstitially dissolved into the solid solution, such as Mg, Ca, Sc, Y, Dy, Er, Yb, and Lu. Generally, a β-Sialon, similar to silicon nitride, has high toughness because the β-Sialon has such a structure that needle-like crystals are entangled. On the other hand, an α-Sialon has large hardness compared with a β-Sialon because the α-Sialon is in the shape of equi-axed crystals, although α-Sialonis inferior in toughness due to its shape.

The grain boundary phase between Sialon grains is a glass phase or a crystal phase made from substances such as the sintering aid, silicon nitride, and silica components included in silicon nitride as impurities. These substances are changed to a liquid phase in the sintering, contribute to the formation of Sialon grains, the rearrangement of the Sialon grains and the growth of the grains, and are solidified in the cooling and formed into the glass phase or the crystal phase. The grain boundary phase has a lower melting point, lower toughness, and lower hardness than the Sialon grains, and therefore the amount of the grain boundary phase has to be limited to a suitable range in order to improve the heat resistance, the toughness, and the hardness of the Sialon sintered body. The amount of the grain boundary glass phase and crystal phase can be decreased by, for example, a reduction of the amount of the sintering aid. However, when the amount of the grain boundary phase is decreased to less than 5%, it will cause deterioration in the strength of the Sialon sintered body. On the other hand, when the amount of the grain boundary phase is increased to more than 20%, it will lower the heat resistance, the toughness, and the hardness of the Sialon sintered body; as explained above, the grain boundary phase is a component inferior to the Sialon particles in the melting point, the toughness, and the hardness. As a result, the life of the Sialon insert becomes more shortened because of mechanical damages, a typical example of which is abrasive wear. In conclusion, the Sialons intered body according to the second invention has to have from 5 to 20% of the grain boundary phase, which comprises a grain boundary crystal phase and/or a grain boundary glass phase.

The area ratio (%) of an area of the grain boundary phase in a section of the Sialon sintered body to an area of the section is calculated in the following way. A cross section of the Sialon sintered body located at a depth not less than 1 mm from the sintered surface of the body is photographed with a scanning electron microscope, which is ordinarily abbreviated to "SEM", the proportion of the area of the grain boundary phase in a predetermined region of the obtained photograph is measured with an image processing software, and the proportion the ratio (%) of the area of the grain boundary phase to that of the region is calculated.

The predetermined region of the SEM photograph is the entire visual field observed at 5000 magnifications, the dimensions of the real region are 15 $\mu$m x 12 $\mu$m. The proportion of the area of the grain boundary phase other than the Sialon grains observed within the visual field is measured with an image processing software. When the area of the cross section of the Sialon sintered body is much larger than the area of the visual field, the area proportion may scatter depending on the part observed. However, the disperse of the proportions due to the observed parts is about +-10% of the average.

In the case of sintered bodies including particles of hard components such as titanium carbide, the hard component particles do not comprise a grain boundary phase.

The Sialon insert according to the second invention has excellent cutting properties when the Sialon grains comprise β-Sialon that is highly tough. However, even when parts of the Sialon grains are α-Sialon, no deterioration in the cutting properties is recognized. Excellent cutting properties are ensured until the α-value, which means that the amount of α-Sialon in the Sialon grains, is 40%. If the α-value exceeds 40%, equi-axed α-Sialon crystals increase to such an extent that the resultant insert would be liable to chip off, which is not desirable. In summary, when the α-value is 40% or less, the insert will have sufficient cutting properties including the resistances to wear and chipping off, which is desirable.

The insert according to the second invention comprises β-Sialon represented by the formula $Si_{6-Z}Al_ZO_ZN_{8-Z}$ with a value of Z from 0.2 to 1.0. The insert with the Z value, a measured value, in the range between 0.2 and 1.0, reduces the decomposition resulting from chemical reactions between the insert and the workpiece, compared with an insert made of silicon nitride, and reduces decrease in the strength because the silicon nitride is changed to a Sialon. In addition, the Sialon insert according to the second invention has a dissolution degree of Al in the solid solution is 70% or more, which makes it possible to provide a sintered body with a small amount of aluminum components remaining in the grain boundary and to control mechanical damages, atypical example of which is abrasive wear due to a friction between the insert and the workpiece. The measured Z value is calculated from the difference between the lattice constant of the <u>a</u> axis of the β-Sialon located at a depth of 1 mm or more from the sintered surface of the Sialon sintered body, measured through X-ray diffraction, and that of the <u>a</u> axis of β-silicon nitride, which is 7.60442 Å. For the method of the calculation, see, for example, page 28 of the WO02/44104 publication. The theoretical Z value is calculated by the following formula:

```
Theoretical Z = 6 x (Al/26.98)/{(Al/26.98)+(Si/28.09)}
```

wherein "Al" and "Si" denote the respective percents by weight of Si and Al calculated from the amounts thereof in the structure located at a depth of not less than 1 mm from the sintered surface of the Sialon sintered body, measured by a chemical analysis, such as X-ray fluorescence analysis.

The insert according to the second invention has a dissolution degree of Al, represented by (measured Z value/ theoretical Z value), of 70% or more, which reduces the amount of aluminum components remaining in the grain boundary and reduces mechanical damage to the insert, a typical example of which is abrasive wear between the insert and the workpiece. Note that the dissolution degree of Al can be controlled by adjusting the sintering temperature when the body is sintered, the time period over which the temperature is raised, and the atmosphere in which the sintering is carried out, and/or by varying the ratio of the number of the nitrogen atoms to that of the oxygen atoms in the sintered body.

The sintering aid used for sintering the Sialon insert should preferably be at least one rare-earth element selected from the group consisting of Sc, Y, Ce, Er, Dy, Yb, and Lu. The amount of the sintering aid is from 0.5 to 10% by mole in terms of the oxide thereof based on the mole of the sintered body. The above-mentioned limitations on the amount and the kind of the rare-earth elements, which contribute to making the grain structure of the Sialon of the insert according to the present invention like needles in shape. When the amount is less than 0.5% by mole, the grain structure of the Sialon does not sufficiently grow into the needles-like shape, which would be a cause for lowering the strength of the Sialon insert material. On the other hand, if the amount exceeds 10% by mole, the Sialons intered body per se deteriorates in the heat resistance, toughness, and hardness. An undesirable result is that the life of the insert is shortened by mechanical damage, a typical example of which is abrasive wear.

The molar percent of the rare-earth element included in the Sialon sintered body in terms of the oxide thereof has already been explained in the description associated with the first invention.

The Sialon insert according to the second invention should include 30% by mole or less, preferably from 0.1 to 25% by mole, more preferably from 1 to 20% by mole of at least one hard component selected from the group consisting of carbides, nitrides, and carbonitrides of titanium. Normally, hard components like the above-mentioned disperse in the Sialon sintered body in the form of independent particles. Compared with silicon nitride, the titanium compounds, as well as alumina, has small reactivity with iron and carbon, which are the main components of workpieces. Therefore the existence of the titanium compounds in the sintered body may reduce the reactivity of the sintered body with the workpiece. The titanium compounds are not dissolved into the crystal lattices of the sintered body but dispersed independently in the form of particles. Even if the amount of the titanium compounds exceeds the above-mentioned upper limit, deterioration in the cutting performance is not recognized. However, because the titanium compounds have a larger thermal expansion coefficient than Sialon, the insert may be affected by the heat that is generated during the working and the cutting edge of the tool may chip off due to cracks caused by the heat, which is not desirable. It can be examined by observation with an optical microscope or an electron microscope whether the titanium compounds are dispersed in the form of independent particles. Also, the percent by mole of the titanium compounds can be calculated in the same way as that of the rare-earth element in terms of the oxide thereof.

The Sialon insert according to the second invention, which we have explained hereinbefore, is fixed, as a throwaway tip, to the holder and used as a part of a high-performance cutting tool. The product according to the second invention is the optimum for a long-life insert used for high-speed crude cutting of materials, especially cast iron.

A preferable method of producing the Sialon insert according to the second invention will be explained in the followings. A first powder of materials including the elements that will form a Sialon, such as a combination of $Si_3N_4$ powder and $Al_2O_3$ powder, and further AlN powder, is mixed with a second powder of the oxide of the rare-earth element as sintering aid. Examples of the second powder may include $Sc_2O_3$ powder, $Y_2O_3$ powder, $CeO_2$ powder, $Dy_2O_3$ powder, $Er_2O_3$ powder, $Yb_2O_3$ powder, $Lu_2O_3$ powder, etc. It is preferable if a powder of the hard component selected from the group consisting of TiN powder, TiC powder, and TiCN powder is further added to the mixture of the first powder and the second powder. Thus, the powdery raw material is prepared. The powdery raw material should consist of particles with an average particle size of 5 $\mu$m or less, preferably 3 $\mu$m or less, more preferably 2 $\mu$m or less. The composition of the components of the powdery raw material should be decided based on the composition of the components of the insert after the sintering. Typically, the powdery raw material includes from 95 to 30% by mole of the $Si_3N_4$ powder, from 0.5 to 20% by mole of the $Al_2O_3$ powder, from 0 to 20% by mole of the AlN powder, from 0.5 to 10% by mole of the sintering aid, and from 0 to 30% by mole of the powder of the hard component. A slurry is prepared from the powdery raw material in the same way as the slurry for the Sialon insert according to the first invention is.

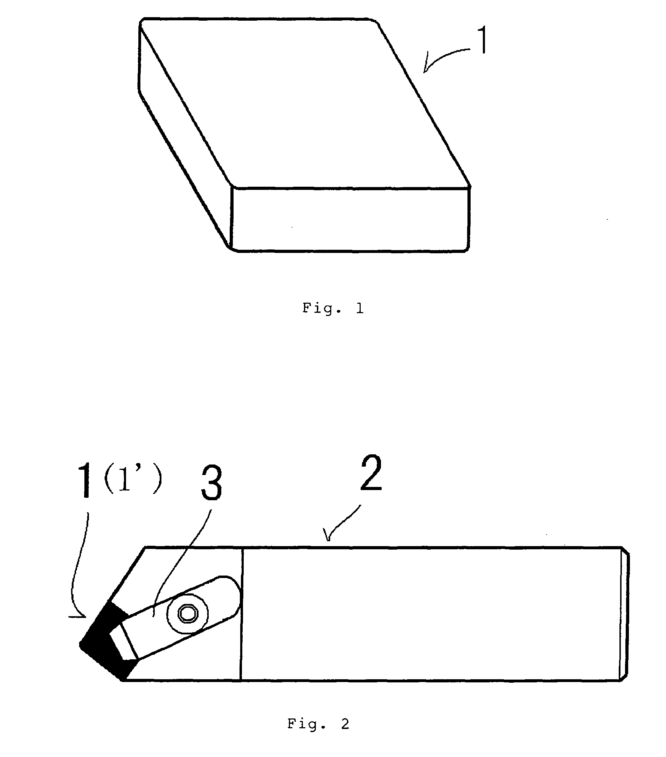

A Sialon insert is produced by preparing a granulated powder from the slurry, press-molding a body with a desirable shape from the granulated powder, degreasing the molded body, and sintering the degreased molded body. The detailed steps of the production are the same as those in which the insert according to the first invention is produced. The sintered body thus obtained is a Sialon sintered body. An insert 1 for cutting tools according to the second invention can be made by grinding the sintered body into such a shape as shown in Figure 1. A cutting tool is obtained by fixing the insert 1 to a holder, as shown in Figure 2.

(Sialon Insert according to the Third Invention)

The Sialon insert according to the third invention, similar to the Sialon inserts of the first and second inventions, is formed from a Sialon sintered body including a Sialon phase, as main phase, comprising an $\alpha$-Sialon phase and a $\beta$-Sialon phase, both of which are prepared by dissolving an aluminum compound into silicon nitride, bound together with a sintering aid. The $\beta$-Sialon phase in the Sialon sintered body has a structure of entangled fine needle-shaped crystals, which is similar to the structure of silicon nitride. The crystals per se have a larger strength than materials, such as alumina, used for conventional tools have, which prevents the cutting edge of the tool from chipping off too soon and makes the life of the tool longer. However, if the amount of the dissolved aluminum compound is too much, the strength of the Sialon is lowered, which weakens the insert so that the cutting edge thereof will be prone to chip off. The amount of the added aluminum compound has to be so adjusted that the aluminum compound is capable of reducing the reactivity with the workpiece while it does not lower the strength of the sintered body. The aluminum compound also has an effect of contributing to a control on the reaction between the Sialon sintered body and the workpiece even when the aluminum compound is not dissolved into the silicon nitride but just exists in the grain boundary phase. Compared with silicon nitride, the Sialon is chemically stable and unlikely to react with iron and carbon, which are main components of workpieces, even at a high temperature. Therefore it is important to keep the amount of the added aluminum compound appropriate in order to make both the strength and the chemical stability satisfactory. The specific amount of the aluminum compound to be added has to be so decided that the value of Z of the $\beta$-Sialon, represented by $Si_{6-Z}Al_ZO_ZN_{8-Z}$, in the Sialon sintered body is from not less than 0.2 to not more than 1. When the value of Z is less than 0.2, adhesion reactions between the Sialon sintered body and workpieces are liable to take place, which cancels the effect of prolonging the life of the insert. On the other hand, when the value of Z exceeds 1, the aluminum content is increased so that the Sialon content in the sintered body increases accordingly, which leads to a noticeable deterioration in the strength of the insert due to the corresponding. As s result, the strength of the cutting edge of the tool is lowered, and considerable wear and chipping-off are observed. The method of measuring the value of Z has been explained hereinbefore.

In the third invention, it is important to control the composition of the $\alpha$-Sialon and the content thereof in the Sialon phase. The $\alpha$-Sialon is represented by the chemical formula $M_x(Si, Al)_{12}(O, N)_{16}$, wherein M denotes an element interstitially dissolved into the grains, such as Mg, Ca, Sc, Y, Dy, Er, Yb, or Lu, and X is a value satisfying the formula: $0<X\leq2$. The $\alpha$-Sialon is in the shape of equi-axed crystal granules, which makes the $\alpha$-Sialon have lower toughness than the $\beta$-Sialon, yet the former has large hardness. By forming a predetermined amount of the $\alpha$-Sialon with large hardness simultaneously in the Sialon sintered body, with optimizing the element dissolved into the $\alpha$-Sialon and the amount thereof, the Sialon sintered body has an improved resistance to the reaction with the workpiece and an enlarged wear resistance, compared with a Sialon sintered body consisting of the only $\beta$-Sialon.

If the total amount of the rare-earth elements Sc, Y, Dy, Yb, and Lu dissolved into the $\alpha$-Sialon is set to 30 to 50% by mole of the total amount of all the rare-earth elements included in the whole Sialon sintered body, it will improve the chemical stability of the Sialon sintered body and control the reaction between the Sialon sintered body and the workpiece. Also, the Sialon sintered body should include at least one of the above-mentioned rare-earth elements in an amount of 2 to 5% by mole in total, and above-mentioned molar range of the rare-earth elements should be dissolved into the $\alpha$-Sialon. This will reduce the grain boundary phase while ensuring that the Sialon sintered body has good sinterability and effectively reduce the mechanical wear and damage due to the grain boundary phase.

The Sialon insert according to the third invention has an $\alpha$-value from 10 to 40%, and at least one rare-earth element selected from the group consisting of Sc, Y, Dy, Yb, and Lu in an amount of 2 to 5% by mole in terms of the oxide thereof, wherein from 30 to 50% by mole of the rare-earth element is in the $\alpha$-Sialon crystal lattices. When the $\alpha$-value is less than 10% and the rare-earth element dissolved into the $\alpha$-Sialon is less than 30 mol% of the entire amount of the rare-earth element, the $\alpha$-Sialon excellent in the resistance to the reaction with the workpiece is not formed sufficiently, which makes the Sialon sintered body deteriorate in the resistance to the reaction with the workpiece, which, in turn, leads to an insert that is prone to suffer from adhesion and damage resulting from the chemical reaction between the workpiece and the cutting edge of the tool. On the other hand, if the $\alpha$-value exceeds 40%, it increases the amount of equi-axed $\alpha$-Sialon crystals with low toughness, which reduces the resistance to chipping-off. Also, when the rare-earth element in an amount more than 50 mol% of the entire amount thereof is dissolved into the $\alpha$-Sialon, the strength of the $\alpha$-Sialon granules *per* se is lowered though the resistance to the reaction between the Sialon sintered body and the workpiece is sufficient. This is not desirable, either.

The grain boundary phase between the Sialon grains is formed in the following way: The sintering aid, silicon-nitride, and silica components included as impurities in the silicon nitride liquefy when they are sintered, contribute to the formation, rearrangement, and growth of the Sialon grains, and solidify to a glass phase or a crystalline phase when cooled. Compared with the Sialon grains, the grain boundary phase has a lowmelting point, low toughness, and low hardness. Therefore in order to improve the heat resistance, toughness, and hardness of the Sialon sintered body, the sintered body should include a small amount of the boundary grain phase. The boundary grain phase may be decreased by reducing, for example, the amount of the sintering aid. However, if a too small amount of the sintering aid is used, the Sialon phase cannot be sintered completely, which lowers the strength of the Sialon sintered body. In the present invention, the molar percent of the aforementioned rare-earth element in terms of the oxide there of can be calculated by the way we have explained.

The Sialon insert according to the third invention should include at least one hard component selected from the group consisting of carbides, nitrides, and carbonitrides of titanium in an amount of not more than 30% by mole, preferably from 0.1 to 25% by mole, more preferably from 1 to 20% by mole. Normally, the hard component disperses in the sintered body independently in the form of particles. The above-mentioned titanium compounds, similar to alumina, have low reactivity with iron and carbon, which are the main components of workpieces, compared with silicon nitride. Therefore their existence in the Sialon sintered body can control the reaction of the insert with workpieces. When the amount of the titanium compounds, which have a larger thermal expansion coefficient than Sialon, exceeds the upper limit, the heat generated during cutting operations causes cracks in the cutting edge, which further makes the cutting edge of the tool prone to chip off. It can be examined by observation with an optical microscope or an electron microscope whether the titanium compounds are dispersed independently in the form of particles. Also, the percent by mole of the titanium compounds can be calculated in the same way as that of the rare-earth element in terms of the oxide thereof.

The Sialon insert according to the third invention is fixed to a cutting-tool holder in the same way as the Sialon inserts according to the first and second inventions, and the assembly can be used as a high-performance cutting tool. The Sialon insert is especially appropriate for a cutting tool to cut materials, such as ductile iron, at a high speed crudely yet precisely while enjoying a long life. Note that the cutting tool according to the fourth invention, utilizing the Sialon inserts according to the first to the third inventions, is a cutting tool in a broad sense, or includes a wide variety of cutting tools used for rough cutting and finishing, examples of which are turning, milling, and grooving.

A preferable method of producing the Sialon insert according to the third invention is basically the same as the methods of producing the Sialon inserts according to the first and second inventions.

In a preferable method of producing the Sialon insert according to the third invention, a first powder of materials including the elements that will form a Sialon, such as a combination of $Si_3N_4$ powder and $Al_2O_3$ powder, and further AlN powder, is mixed with a second powder of the oxide of the rare-earth element as sintering aid. Examples of the second powder may include $Sc_2O_3$ powder, $Y_2O_3$ powder, $Dy_2O_3$ powder, $Yb_2O_3$ powder, $Lu_2O_3$ powder, etc. The second powders may be used singly or in combination. It is preferable if a powder of the hard component selected from the group consisting of TiN powder, TiC powder, and TiCN powder is further added to the mixture of the first powder and the second powder. Thus, the powdery raw material is prepared. A slurry is prepared from the powdery raw material in the same way as the slurry for the Sialon insert according to the first invention is.

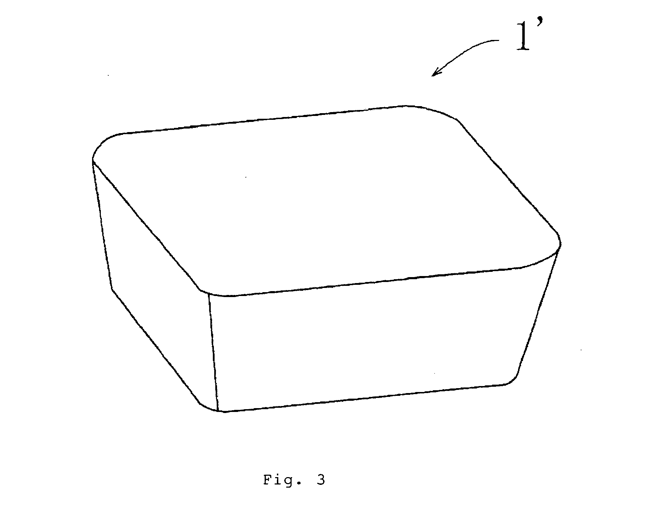

A sintered body is prepared from the slurry in the same way as the sintered body of the first invention is. The sintered body thus obtained is a Sialon sintered body. A Sialon insert for cutting tools according to the third invention can be made by working the sintered body into the shape of the insert 1 shown in Figure 1 or the insert 1' shown in Figure 3. A cutting tool for working outer peripheral faces or a milling cutter is obtained by fixing the insert to a holder for the cutting tool or a milling cutter 6, as shown in Figures 2 and 5.

Examples

A. Working Examples A-U and Comparative Examples *1-*11 for the First Invention

(1) Preparation of Insert

Powdery raw materials were prepared by mixing $\alpha$-$Si_3N_4$ powder with an average particle size of 0.5 $\mu$m; a sintering aid selected from the group consisting of $Sc_2O_3$ powder with an average particle size of 1.0 $\mu$m, $Y_2O_3$ powder with an average particle size of 1.3 $\mu$m, $CeO_2$ powder with an average particle size of 1.7 $\mu$m, $Dy_2O_3$ powder with an average particle size of 0.9 $\mu$m, $Er_2O_3$ powder with an average particle size of 1.0 $\mu$m, $Yb_2O_3$ powder with an average particle size of 1.1 $\mu$m, and $Lu_2O_3$ powder with an average particle size of 1. 0 $\mu$m; and further $Al_2O_3$ powder with an average particle size of 0.4 $\mu$m and AlN powder with an average particle size of 1.3 $\mu$m, respectively in the amounts shown in Table 1 so that the powdery raw materials had the compositions shown in the same table. Then, each of the powdery raw materials was placed in a pot mill, the inside walls of which was made of $Si_3N_4$, with $Si_3N_4$ balls, and ethanol was added to it. The ingredients in the pot mill were mixed for 96 hours and a slurry for each powdery raw material was obtained. Large particles included each slurry were removed with a sieve of 325 in mesh. 5.0% by weight of a micro wax type of organic binder dissolved in ethanol was added to each sieved slurry. Then, the resultant was spray-dried and granules were prepared. The granules were pressed into the shape of an SNGN120412 insert according to the ISO standards, shown in Figure 1. The pressed was degreased in an oven for 60 minutes at 600°C in an atmosphere of nitrogen of 1 atmospheric pressure. The first sintering was done in the following way: The degreased mold was placed in a vessel made of silicon nitride. The surrounding temperature was raised to 1600°C, and the degreased mold in the vessel was kept at the temperature for 60 to 240 minutes. Then, the temperature was increased to 1700 to 1800°C, and the mold in the vessel was kept at the increased temperature in an atmosphere of nitrogen of 1 to 9 atmospheric pressure for 120 minutes. Finally, the second sintering was carried out by hot isostatic pressing (HIP). Specifically, the body after the first sintering was heated for 180 minutes at a temperature of 1700 to 1800°C in an atmosphere of nitrogen under 1000 atmospheric pressure. The obtained Sialon sintered body was ground and formed into the SNGN120412 shape of the ISO standards. Thus, an insert for the cutting tool was produced from each powdery raw material. The composition and properties as well as the results of evaluated cutting performances of the insert of each working example and comparative example are shown in Table 1. In the Table, in the column of "Example", the numbers with "*" mean that the examples of the numbers are comparative ones. The compositions of the respective Sialon sintered bodies are expressed by "mol%" according to the method explained hereinbefore.

(2) Measurement of Properties of Inserts

The methods of measuring the properties of the inserts will be explained. The $\alpha$-values of the Sialon particles and the Z values of the $\beta$-Sialon were measured by the methods explained hereinbefore. Concerning the thermal expansion coefficient, the Sialon sintered body of each working example and comparative example was ground and formed into a test piece with the three dimensions of 5 mm x 5 mm x 10 mm, and the average thermal expansion coefficient of the test piece was measured in an atmosphere of nitrogen at temperatures from room temperature to 1000°C according to JIS R1618. The thermal conductivity of each insert was obtained by grinding each sintered body into a test piece in the shape of a disc with 10 mm in diameter and 2 mm in thickness, measuring values of the thermal conductivity at temperatures from room temperature to 1000°C according to JIS R1611, which is usually called "laser flash method", and taking the smallest value for the thermal conductivity to be shown.

With respect to the strength, the Sialon sintered body of each example was ground and formed into test pieces with the three dimensions of 3 mm x 4 mm x 36 mm or more . The three-point bending test according to JIS R1601 was carried out five times or more, each time with a test piece, and the average of the results are shown in the Table.

The density of the sintered body of each example was measured by Archimedes' method. The measured value was divided by the theoretical density, and the ratio of the measured density to the theoretical density was calculated. With all the samples of the Working Examples were obtained high ratios, which meant that there was no micro pore remaining in the sintered bodies.

(3) Evaluation of Cutting Performances

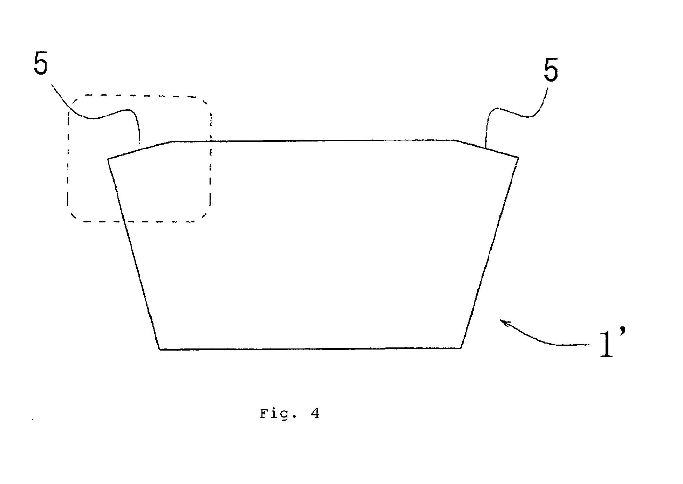

The respective cutting edges of the inserts of each example were beveled as shown in Figure 4. The width of each bevel was 0.3 mm and the angle thereof was 25 degrees. The inserts were fixed to the holder for a six-insert face milling cutter shown in Figure 5. Cutting was carried out under the conditions shown below. The number of cut workpieces that the cutter had cut until the flank wear (VB) of the cutting edge of each insert reached 0.3 mm was regarded as an indicator to show the duration of life. When a cutting edge chipped off before the flank wear (VB) reached 0.3 mm, the number of cut workpieces that the cutter had cut until the edge chipped off was regarded as the indicator.

(Cutting Conditions)

  □Workpiece: ductile iron with casting surface according to JIS FCD600
  □Dimensions : 130 mm in length by 700 mm in width by 30 mm in thickness
  □Cutting Speed: 700 m/min
  □Feed Rate: 0.15 mm/blade
  □Depth of Cut: 2.0 mm
  □Coolant: Not used (Dry type)
  □Cutter Used: Φ100, cut with a single insert

Table 1 (1/2)

| Example | Sintering temp.[°C] | Composition [mol%] | | | Amount of rare-earth element in the sintered body [mol%] |
|---|---|---|---|---|---|
| | | $Si_3N_4$ | Rare-earth element | Al composition | |
| *1 | 1800 | 83.9 | $0.1Y_2O_3$ | $1Al_2O_3+15AlN$ | $0.1Y_2O_3$ |
| A | 1800 | 83.5 | $0.5Y_2O_3$ | $1Al_2O_3+15AlN$ | $0.5Y_2O_3$ |
| B | 1750 | 82.5 | $1.5Y_2O_3$ | $1Al_2O_3+15AlN$ | $1.3Y_2O_3$ |
| C | 1700 | 81.0 | $3Sc_2O_3$ | $1Al_2O_3+15AlN$ | $3Sc_2O_3$ |
| D | 1750 | 81.0 | $3Y_2O_3$ | $1Al_2O_3+15AlN$ | $2.8Y_2O_3$ |
| *2 | 1750 | 81.0 | $3CeO_2$ | $1Al_2O_3+15AlN$ | $3CeO_2$ |
| *3 | 1750 | 91.0 | $5Y_2O_3$ | $1Al_2O_3+3AlN$ | $4.8Y_2O_3$ |
| E | 1750 | 81.0 | $3Dy_2O_3$ | $1Al_2O_3+15AlN$ | $3Dy_2O_3$ |
| *4 | 1750 | 81.0 | $3Er_2O_3$ | $1Al_2O_3+15AlN$ | $3Er_2O_3$ |
| F | 1750 | 81.0 | $3Yb_2O_3$ | $1Al_2O_3+15AlN$ | $3Yb_2O_3$ |
| G | 1700 | 81.0 | $3Lu_2O_3$ | $1Al_2O_3+15AlN$ | $3Lu_2O_3$ |
| H | 1710 | 79.0 | $5Y_2O_3$ | $1Al_2O_3+15AlN$ | $5Y_2O_3$ |
| *5 | 1700 | 74.0 | $10Y_2O_3$ | $1Al_2O_3+15AlN$ | $9.5Y_2O_3$ |
| *6 | 1730 | 91.5 | $3Y_2O_3$ | $0.5Al_2O_3+5AlN$ | $3Y_2O_3$ |
| I | 1740 | 87.5 | $3Y_2O_3$ | $1Al_2O_3+8.5AlN$ | $3Y_2O_3$ |
| J | 1750 | 71.0 | $3Y_2O_3$ | $2.5Al_2O_3+23.5AlN$ | $3Y_2O_3$ |
| *7 | 1800 | 64.0 | $3Y_2O_3$ | $3Al_2O_3+30AlN$ | $2.9Y_2O_3$ |
| *8 | 1800 | 64.0 | $3Y_2O_3$ | $3Al_2O_3+22AlN$ | $3Y_2O_3$ |
| *9 | 1800 | 83.0 | $3Y_2O_3$ | $5Al_2O_3+9AlN$ | $3Y_2O_3$ |
| K | 1700 | 80.5 | $3Y_2O_3$ | $3Al_2O_3+13.5AlN$ | $3Y_2O_3$ |
| L | 1730 | 79.0 | $3Y_2O_3$ | $1Al_2O_3+17AlN$ | $2.9Y_2O_3$ |
| *10 | 1740 | 79.5 | $3Y_2O_3$ | $0.5Al_2O_3+17AlN$ | $3Y_2O_3$ |
| M | 1800 | 92.0 | $0.5Y_2O_3$ | $1.5Al_2O_3+6AlN$ | $0.5Y_2O_3$ |
| N | 1740 | 88.0 | $5Y_2O_3$ | $1.5Al_2O_3+5.5AlN$ | $4.7Y_2O_3$ |
| O | 1740 | 72.0 | $0.5Y_2O_3$ | $1.5Al_2O_3+26AlN$ | $0.5Y_2O_3$ |
| P | 1740 | 68.5 | $5Y_2O_3$ | $1.5Al_2O_3+25AlN$ | $5Y_2O_3$ |
| Q | 1740 | 90.0 | $0.5Y_2O_3$ | $0.5Al_2O_3+9AlN$ | $0.5Y_2O_3$ |
| R | 1740 | 86.0 | $5Y_2O_3$ | $0.5Al_2O_3+8.5AlN$ | $4.9Y_2O_3$ |
| S | 1800 | 76.5 | $0.5Y_2O_3$ | $6.5Al_2O_3+16.5AlN$ | $0.5Y_2O_3$ |
| T | 1700 | 73.0 | $5Y_2O_3$ | $6.5Al_2O_3+15.5AlN$ | $5Y_2O_3$ |
| U | 1800 | 73.0 | $5Y_2O_3$ | $6.5Al_2O_3+15.6AlN$ | $4.7Y_2O_3$ |
| *11 | 1800 | 81.0 | $3Y_2O_3$ | $3Al_2O_3+13AlN$ | $3Y_2O_3$ |

Table 1 (2/2)

| Example | α-value [%] | Measured Z value | Thermal Expansion Coefficient [x $10^{-6}$/K] | Thermal conductivity [W/m□K] | Strength [MPa] | | (a) |
|---|---|---|---|---|---|---|---|
| | | | | | Room Temp. | 1000°C | |
| *1 | Impossible to be densified | | | | | | |
| A | 24.2 | 0.29 | 3.18 | 13.2 | 1080 | 950 | 7 |
| B | 28.8 | 0.32 | 3.19 | 13.0 | 1050 | 910 | 8 |
| C | 10.0 | 0.38 | 3.20 | 13.0 | 1100 | 950 | 9 |
| D | 20.0 | 0.38 | 3.18 | 14.5 | 1100 | 900 | 10 |
| *2 | 0 | 0.4 | 3.34 | 22.5 | 920 | 500 | 4 |
| *3 | 15.0 | 0.12 | 3.20 | 18.2 | 1050 | 700 | 3 |
| E | 24.5 | 0.4 | 3.18 | 14.1 | 1040 | 920 | 10 |
| *4 | 19.1 | 0.41 | 3.20 | 12.1 | 900 | 620 | (b) |
| F | 24.4 | 0.45 | 3.19 | 13.1 | 1090 | 930 | 9 |
| G | 25.1 | 0.41 | 3.18 | 13.1 | 1120 | 980 | 7 |
| H | 23.3 | 0.39 | 3.20 | 19.0 | 1100 | 940 | 8 |
| *5 | 20.1 | 0.4 | 3.62 | 23.4 | 960 | 800 | (c) |
| *6 | 31.9 | 0.17 | 3.11 | 23.2 | 1000 | 690 | 4 |
| I | 23.6 | 0.22 | 3.13 | 16.0 | 1140 | 910 | 8 |
| J | 26.1 | 0.7 | 3.16 | 13.2 | 1080 | 920 | 9 |
| *7 | 21.3 | 0.95 | 3.30 | 9.1 | 900 | 640 | (d) |
| *8 | 20.1 | 0.65 | 3.30 | 9.5 | 1000 | 820 | 4 |
| *9 | 5.1 | 0.44 | 3.18 | 18.5 | 1010 | 780 | 4 |
| K | 10.4 | 0.44 | 3.14 | 17.0 | 1060 | 930 | 8 |
| L | 40.0 | 0.44 | 3.16 | 14.1 | 1050 | 910 | 8 |
| *10 | 45.8 | 0.42 | 3.14 | 13.7 | 950 | 900 | (e) |
| M | 13.2 | 0.21 | 3.11 | 20.5 | 1020 | 930 | 7 |
| N | 10.0 | 0.2 | 3.13 | 21.8 | 1070 | 950 | 7 |
| O | 39.9 | 0.68 | 3.19 | 13.3 | 1060 | 920 | 9 |
| P | 39.7 | 0.7 | 3.20 | 13.0 | 1000 | 910 | 7 |
| Q | 40.0 | 0.21 | 3.14 | 21.0 | 1080 | 930 | 7 |
| R | 37.5 | 0.21 | 3.19 | 20.0 | 1020 | 940 | 7 |
| S | 10.2 | 0.68 | 3.20 | 13.0 | 1120 | 900 | 9 |
| T | 14.0 | 0.68 | 3.18 | 13.5 | 1100 | 920 | 8 |
| U | 14.0 | 0.68 | 3.42 | 10.8 | 1050 | 930 | 8 |
| *11 | 22.5 | 0.44 | 3.55 | 10.5 | 1030 | 800 | (f) |

Notes:

(a) The number of cut articles that the cutter was able to cut [pieces]

(b) The insert chipped off after it finished cutting four articles.

(c), (e), (f) The respective inserts chipped off after they finished cutting three articles.

(d) The insert chipped off while it was cutting the first article.

As understood from Table 1, the cutting inserts of Examples A-U, which were working examples, were able to cut a large number of workpieces until the flank wear (VB) of the cutting edge of each insert reached 0.3 mm. Furthermore, chipping-off of the respective cutting edges of the inserts made in the working examples was not observed. On the other hand, the cutters equipped with the inserts of Examples *1, *3, and *7-11, which were comparative examples, were able to cut substantially less number of workpieces, and liable to chip off quickly. The lives of the inserts of the comparative examples were less than those of the inserts of the working examples.

In particular, when the results of Example *3 where the Z value was less than 0.2 are compared with those of the working examples, it can be understood that the decomposition and wear of the cutting edges, because of the chemical reaction between the cut workpieces and the base materials of the inserts, was checked with the Sialon inserts according to the present invention. When the results of Examples *2 and *9 in which the $\alpha$-values were less than 10% are compared with those of the working examples, it can be understood that the Sialon inserts according to the present invention suffered from less mechanical damage, a typical example of which was abrasive wear. In conclusion, the Sialon inserts according to the present invention, when used as a tool for crude machining, are excellent in wear resistance, which affects the surface roughness and the dimensional accuracy of the workpiece, and they are capable of cutting workpieces for a long time with keeping the surface roughness of the workpieces and the dimensional accuracy thereof excellent.

B. Working Examples 1-23 and Comparative Examples 1-7 for the Second Invention

(1) Preparation of Insert

Powdery raw materials were prepared by mixing $\alpha$-Si$_3$N$_4$ powder with an average particle size of 0. 5 $\mu$m; a sintering aid selected from the group consisting of Sc$_2$O$_3$ powder with an average particle size of 1.0 $\mu$m, Y$_2$O$_3$ powder with an average particle size of 1.1 $\mu$m, CeO$_2$ powder with an average particle size of 1.7 $\mu$m, Dy$_2$O$_3$ powder with an average particle size of 0. 9 $\mu$m, Er$_2$O$_3$ powder with an average particle size of 1.0 $\mu$m, Yb$_2$O$_3$ powder with an average particle size of 1.1 $\mu$m, and Lu$_2$O$_3$ powder with an average particle size of 1.0 $\mu$m; and further Al$_2$O$_3$ powder with an average particle size of 0.4 $\mu$m, AlN powder with an average particle size of 1.3 $\mu$m, TiN powder with an average particle size of 1.5 $\mu$m, TiC powder with an average particle size of 1.0 $\mu$m, and TiCN powder with an average particle size of 1,0 $\mu$m respectively in the amounts shown in Table 2. Then, each of the powdery raw materials was pressed into a mold in the shape of the insert shown in Figure 1, in the same way explained under the item "(1) Preparation of Insert" in the examples of the first invention. The mold was degreased in an oven for 60 minutes at 600°C in an atmosphere of nitrogen of 1 atmospheric pressure. The first sintering was done in the following way: The degreased mold was placed in a vessel made of silicon nitride. Then, the temperature was increased to 1700 to 1800°C, and the mold in the vessel was kept at the increased temperature in an atmosphere of nitrogen of 1 to 9 atmospheric pressure for 120 minutes. Finally, the second sintering was carried out by hot isostatic pressing(HIP). Specifically, the body after the first sintering was heated for 180 minutes at a temperature of 1700 to 1800°C in an atmosphere of nitrogen under 1000 atmospheric pressure. The temperature of the second sintering was lower than that of the first sintering. The obtained Sialon sintered body was ground and formed into the SNGN120408 shape of the ISO standards. Thus, an insert for the cutting tool was produced from each powdery raw material. The properties and cutting performances of the inserts of the working examples and comparative examples, prepared from powdery raw materials of various compositions under various sintering temperatures, are shown in Table 2. The compositions of the components of the sintered bodies were calculated by the way in which the molar percents were calculated from the compositions of the raw materials.

(2) Measurement of Properties of Inserts

The methods of measuring the properties of the inserts will be explained. The density of the sintered body of each example was measured by Archimedes' method. The measured value was divided by the theoretical density, and the ratio of the measured density to the theoretical density was calculated. With all the samples of the Working Examples were obtained high ratios, which meant that the sintered bodies were densified without micro pores remaining therein. The percentage of the area of the grain boundary phase, the measurement and calculation of measured Z values, the calculation of theoretical Z values, the calculation of the dissolution proportions, the measurement and calculation of $\alpha$-values were carried out with the same method as in the examples of the first invention.

(3) Evaluation of Cutting Performances

The following cutting performance tests were done with the inserts of the working and comparative examples prepared under item (1) above. The results will be shown in Table 2.

□Cutting Distance

The cutting operations were carried out under the following and dry conditions. When the maximum wear (VBmax) of the side flank of each insert reached 0.3 mm, the cutting distance was calculated.

Geometry of Insert: SNGN120408
Width of Chamfer: 0.2 mm
Workpiece: Cast iron (FC200)
Cutting Speed: 500 mm/min.
Depth of Cut: 0.3 mm
Coolant: Not used (Dry type)
Feed Rate: 0.3 mm/min.

DEvaluated Flank Wear

The cutting operations were carried out under the following and dry conditions. The maximum wear of the flank was measured, and the value was considered to represent the evaluated flank wear (unit: mm).

Geometry of Insert: SNGN120408
Width of Chamfer: 0.2 mm
Workpiece: Cast iron with molding sand remaining on its faces (FC200)
Cutting Speed: 300 mm/min.
Depth of Cut: 1.5 mm
Coolant: Not used (Dry type)
Feed Rate: 0.2 mm/min.

DResistance to Chipping Off

The cutting operations were carried out under the following and dry conditions. Beginning with 0.6 mm/rev, the feed rate was increased by 0.05 mm/rev with every cutting path. The feed rate when the insert chipped off was used to evaluate the resistance of the insert to chipping off.

Geometry of Insert: SNGN120408
Width of Chamfer: 0.085 mm
Workpiece: Cast iron (FC200)
Cutting Speed: 150 mm/min.
Depth of Cut: 2.0 mm
Coolant: Not used (Dry type)
Initial Feed Rate: 0.6 mm/rev

Table 2 (1/2)

| | First sintering temp.[°C] | Composition [mol%] | | | |
|---|---|---|---|---|---|
| | | $Si_3N_4$ | Al composition | Rare-earth compound | Ti composition |
| W. Ex. 1 | 1750 | 92 | $5Al_2O_3$ | $3Y_2O_3$ | 0 |
| W. Ex. 2 | 1800 | 67 | $15Al_2O_3+15AlN$ | $3Y_2O_3$ | 0 |
| W. Ex. 3 | 1750 | 67 | $15Al_2O_3+15AlN$ | $3Y_2O_3$ | 0 |
| W. Ex. 4 | 1700 | 67 | $15Al_2O_3+15AlN$ | $3Y_2O_3$ | 0 |
| W. Ex. 5 | 1750 | 81 | $6Al_2O_3+10AlN$ | $3Y_2O_3$ | 0 |
| W. Ex. 6 | 1750 | 73 | $12Al_2O_3+12AlN$ | $3Y_2O_3$ | 0 |
| W. Ex. 7 | 1750 | 71 | $3Al_2O_3+12AlN$ | $3Y_2O_3$ | 0 |
| W. Ex. 8 | 1750 | 81 | $1Al_2O_3+15AlN$ | $3Y_2O_3$ | 0 |
| W. Ex. 9 | 1750 | 69 | $1Al_2O_3+17AlN$ | $3Y_2O_3$ | 0 |
| W. Ex. 10 | 1800 | 85.5 | $7Al_2O_3+7AlN$ | $0.5Y_2O_3$ | 0 |
| W. Ex. 11 | 1700 | 78 | $9Al_2O_3+3AlN$ | $10Y_2O_3$ | 0 |
| W. Ex. 12 | 1730 | 81 | $8Al_2O_3+4AlN$ | $7Y_2O_3$ | 0 |
| W. Ex. 13 | 1740 | 80 | $6Al_2O_3+10AlN$ | $4Y_2O_3$ | 0 |
| W. Ex. 14 | 1740 | 80 | $6Al_2O_3+10AlN$ | $4Sc_2O_3$ | 0 |
| W. Ex. 15 | 1740 | 80 | $6Al_2O_3+10AlN$ | $4CeO_2$ | 0 |
| W. Ex. 16 | 1740 | 80 | $6Al_2O_3+10AlN$ | $4Er_2O_3$ | 0 |
| W. Ex. 17 | 1740 | 80 | $6Al_2O_3+10AlN$ | $4Dy_2O_3$ | 0 |
| W. Ex. 18 | 1740 | 80 | $6Al_2O_3+10AlN$ | $4Yb_2O_3$ | 0 |
| W. Ex. 19 | 1740 | 80 | $6Al_2O_3+10AlN$ | $4Lu_2O_3$ | 0 |
| W. Ex. 20 | 1750 | 66 | $6Al_2O_3+10AlN$ | $3Y_2O_3$ | 15TiN |
| W. Ex. 21 | 1750 | 51 | $6Al_2O_3+10AlN$ | $3Y_2O_3$ | 30TiN |
| W. Ex. 22 | 1750 | 66 | $6Al_2O_3+10AlN$ | $3Y_2O_3$ | 15TiCN |
| W. Ex. 23 | 1750 | 66 | $6Al_2O_3+10AlN$ | $3Y_2O_3$ | 15TiC |
| Co. Ex. 1 | 1700 | 94 | $3Al_2O_3$ | $3Y_2O_3$ | 0 |
| Co. Ex. 2 | 1710 | 63 | $17Al_2O_3+17AlN$ | $3Y_2O_3$ | 0 |
| Co. Ex. 3 | 1700 | 67 | $15Al_2O_3+15AlN$ | $3Y_2O_3$ | 0 |
| Co. Ex. 4 | 1730 | 83 | $14Al_2O_3$ | $3Y_2O_3$ | 0 |
| Co. Ex. 5 | 1740 | 75 | $10Al_2O_3+12AlN$ | $3Y_2O_3$ | 0 |
| Co. Ex. 6 | 1750 | 79.5 | $0.5Al_2O_3+17AlN$ | $3Y_2O_3$ | 0 |
| Co. Ex. 7 | 1800 | 79 | $18AlN$ | $3Y_2O_3$ | 0 |

Table 2 (2/2)

| | Meas-ured Z value | Incorpora-tion proportion [%] | Amount of grain boundary phase[%] | α-value [%] | Cutting distance [km] | Evalu-ated Flank Wear | Resist-ance to chipping off |
|---|---|---|---|---|---|---|---|
| W. Ex. 1 | 0.2 | 95 | 10 | 0 | 29 | 0.7 | 1.4 |
| W. Ex. 2 | 1.0 | 92 | 10.5 | 0 | 50 | 1.2 | 1.2 |
| W. Ex. 3 | 0.9 | 83 | 15 | 0 | 38 | 1.5 | 1.6 |
| W. Ex. 4 | 0.8 | 75 | 19.5 | 0 | 32 | 1.6 | 1.5 |
| W. Ex. 5 | 0.4 | 90 | 11 | 0 | 35 | 1.0 | 1.8 |
| W. Ex. 6 | 0.7 | 80 | 9.4 | 0 | 40 | 0.9 | 1.2 |
| W. Ex. 7 | 0.4 | 91 | 10.3 | 15 | 30 | 1.3 | 1.1 |
| W. Ex. 8 | 0.4 | 93 | 6 | 28 | 30 | 0.6 | 1.8 |
| W. Ex. 9 | 0.4 | 90 | 7.4 | 40 | 35 | 0.7 | 1.1 |
| W. Ex. 10 | 0.4 | 85 | 6.2 | 0 | 33 | 1.3 | 1.2 |
| W. Ex. 11 | 0.4 | 86 | 10.1 | 0 | 31 | 1.4 | 1.5 |
| W. Ex. 12 | 0.4 | 90 | 9.7 | 0 | 35 | 1.1 | 1.3 |
| W. Ex. 13 | 0.4 | 92 | 8 | 0 | 38 | 1.0 | 1.5 |
| W. Ex. 14 | 0.4 | 86 | 10 | 0 | 30 | 1.0 | 1.3 |
| W. Ex. 15 | 0.4 | 90 | 8 | 0 | 36 | 1.1 | 1.3 |
| W. Ex. 16 | 0.4 | 84 | 11 | 0 | 32 | 0.9 | 1.3 |
| W. Ex. 17 | 0.4 | 80 | 13 | 0 | 33 | 0.8 | 1.1 |
| W. Ex. 18 | 0.4 | 92 | 8 | 0 | 35 | 1.2 | 1.3 |
| W. Ex. 19 | 0.4 | 90 | 10 | 0 | 32 | 0.7 | 1.0 |
| W. Ex. 20 | 0.5 | 91 | 12 | 0 | 38 | 1.6 | 1.2 |
| W. Ex. 21 | 0.5 | 88 | 10.6 | 0 | 40 | 1.7 | 1.3 |
| W. Ex. 22 | 0.5 | 85 | 11.3 | 0 | 41 | 1.7 | 1.3 |
| W. Ex. 23 | 0.5 | 89 | 10.8 | 0 | 37 | 1.7 | 1.2 |
| Co. Ex. 1 | 0.1 | 86 | 10.7 | 0 | 12 | 1.5 | 1.2 |
| Co. Ex. 2 | 1.2 | 90 | 12 | 0 | 51 | 2.2 | 0.8 |
| Co. Ex. 3 | 0.7 | 64 | 18 | 0 | 39 | 3.3 | 1.3 |
| Co. Ex. 4 | 0.5 | 84 | 23 | 0 | 40 | 3.8 | 1.4 |
| Co. Ex. 5 | 0.6 | 90 | 3 | 0 | 42 | 0.7 | 0.7 |
| Co. Ex. 6 | 0.4 | 84 | 8.5 | 45 | 45 | 1.6 | 0.7 |
| Co. Ex. 7 | 0.4 | 89 | 9.9 | 58 | 46 | 1.5 | 0.6 |

As understood from Table 2, the inserts according to the second invention, or those of the working examples, had cutting edges with a long cutting distance, a small amount of evaluated flank wear, and excellent resistance to chipping off. On the other hand, the inserts of the comparative examples were inferior in at least one of the cutting distance, the evaluated flank wear, and the resistance to chipping off, which is not desirable.

C. Working Examples 24-41 and Comparative Examples 8-16 for the Third Invention

(1) Preparation of Throwaway Tip

Powdery raw materials were prepared by mixing $\alpha$-$Si_3N_4$ powder with an average particle size of 0. 5 $\mu$m; a sintering aid selected from the group consisting of $Sc_2O_3$ powder with an average particle size of 1.0 $\mu$m, $Y_2O_3$ powder with an average particle size of 1.3 $\mu$m, $CeO_2$ powder with an average particle size of 1.7 $\mu$m, $Dy_2O_3$ powder with an average particle size of 0.9 $\mu$m, $Er_2O_3$ powder with an average particle size of 1.0 $\mu$m, $Yb_2O_3$ powder with an average particle size of 1.1 $\mu$m, and $Lu_2O_3$ powder with an average particle size of 1.0 $\mu$m; and further $Al_2O_3$ powder with an average particle size of 0.4 $\mu$m, AlN powder with an average particle size of 1.3 $\mu$m, and TiN powder with an average particle size of 1.5 $\mu$m respectively in the amounts shown in Table 3. Then, each of the powdery raw materials was placed in a pot mill, the inside walls of which was made of $Si_3N_4$, with $Si_3N_4$ balls, and ethanol was added to it. The ingredients in the pot mill were mixed for 24 hours and a slurry for each powdery raw material was obtained. From each slurry was prepared a pressed mold in the geometry of the insert shown in Figure 1, in the same way explained under the item "(1) Preparation of Insert" in the examples of the first invention. The mold was degreased in an oven for 60 minutes at 600°C in an atmosphere of nitrogen of 1 atmospheric pressure. The first sintering was done in the following way: The degreased mold was placed in a vessel made ofsiliconnitride. Then, the temperature was increased to 1800°C, and the mold in the vessel was kept at the increased temperature in an atmosphere of nitrogen of 6 atmospheric pressure for 120 minutes. In order to remove pores remaining in the first sintered body the second sintering was carried out by hot isostatic press (HIP). Specifically, the body after the first sintering was heated for 120 minutes at a temperature of 1700 °C in an atmosphere of nitrogen under 1000 atmospheric pressure. The obtained Sialon sintered body was ground and formed into an insert in the geometry according to SNGN120408 of the ISO standards. Thus, an insert for the cutting tool was produced from each powdery raw material.

(2) Measurement of Properties of Inserts

The methods of measuring the properties of the inserts will be explained. The density of the sintered body of each example was measured by Archimedes' method. The measured value was divided by the theoretical density, and the ratio of the measured density to the theoretical density was calculated. With all the samples except the sample of Comparative Example 8 were obtained high ratios, which meant that the sintered bodies other than the sintered body of Comparative Example 8 were densified without micro pores remaining therein. The properties of the densified sintered bodies were measured. The measurements and calculations associated with the Z values and the $\alpha$-values were carried out with the same methods as in the examples described hereinbefore. The dissolution amounts of Sc, Ce, Y, Dy, Er, Yb, and Lu in the $\alpha$-Sialon particles were measured by observing the structures with a transmission electron microscope and carrying out chemical composition analyses with its attached EDX analyzer. The ratio of the amount (mol) of the sintering aid dissolved into the $\alpha$-Sialon particles to that of the added sintering aid was calculated (Unit: mol%). The observation was carried out at 50, 000 magnifications. The compositions and properties of the inserts of the working examples and comparative examples, prepared from powdery raw materials of various compositions, are shown in Table 3.

(3) Evaluation of Cutting Performances of Inserts

The inserts of the working examples and comparative prepared under item (1) above were tested for the following performances. The results will be shown in Table 3.
The cutting edge of the insert of each example was so beveled that the width of each bevel was 0.3 mm and the angle thereof was 25 degrees. The insert was then fixed to a milling cutter. (See Figures 4 and 5.) Cutting was carried out under the conditions shown below. The number of cut workpieces that the cutter had cut until the flank wear (VB) of the cutting edge of each insert reached 0.3 mm was regarded as an indicator to show the duration of life. When a cutting edge chipped off before the flank wear (VB) reached 0.3 mm, the number of cut workpieces that the cutter had cut until the edge chipped off was regarded as the indicator.

(Cutting Conditions)

□ Workpiece: ductile iron with casting surface according to JIS FCD600, measuring 130 mm in length by 700 mm in width by 30 mm in thickness
□ Cutting Speed: 1000 m/min.
□ Feed Rate: 0.15 mm/blade
□ Depth of Cut: 2.0 mm
□ Coolant: Not used (Dry type)
□ Cutter Used: Φ100, cut with a single tip

**EP 1 837 105 A1**

Table 3 (1/2)

| | RunNo. | Composition [mol%] | | |
| | | Si$_3$N$_4$ | Sintering aid | Al composition | TiN |
|---|---|---|---|---|---|
| Working Examples | 24 | 81 | 2Y$_2$O$_3$ | 1Al$_2$O$_3$+16AlN | |
| | 25 | 79 | 4Sc$_2$O$_3$ | 1Al$_2$O$_3$+16AlN | |
| | 26 | 79 | 4Y$_2$O$_3$ | 1Al$_2$O$_3$+16AlN | |
| | 27 | 79 | 4Dy$_2$O$_3$ | 1Al$_2$O$_3$+16AlN | |
| | 28 | 79 | 4Yb$_2$O$_3$ | 1Al$_2$O$_3$+16AlN | |
| | 29 | 79 | 4Lu$_2$O$_3$ | 1Al$_2$O$_3$+16AlN | |
| | 30 | 78 | 5Y$_2$O$_3$ | 1Al$_2$O$_3$+16AlN | |
| | 31 | 86.5 | 4Y$_2$O$_3$ | 1Al$_2$O$_3$+8.5AlN | |
| | 32 | 70 | 4Y$_2$O$_3$ | 2.5Al$_2$O$_3$+23.5AlN | |
| | 33 | 63 | 4Y$_2$O$_3$ | 3Al$_2$O$_3$+30AlN | |
| | 34 | 79.5 | 4Y$_2$O$_3$ | 3Al$_2$O$_3$+13.5AlN | |
| | 35 | 78 | 4Y$_2$O$_3$ | 1Al$_2$O$_3$+17AlN | |
| | 36 | 65 | 2Y$_2$O$_3$ | 3Al$_2$O$_3$+30AlN | |
| | 37 | 80 | 2Y$_2$O$_3$ | 1Al$_2$O$_3$+17AlN | |
| | 38 | 78.5 | 5Y$_2$O$_3$ | 3Al$_2$O$_3$+13.5AlN | |
| | 39 | 85.5 | 5Y$_2$O$_3$ | 1Al$_2$O$_3$+8.5AlN | |
| | 40 | 61.5 | 4Y$_2$O$_3$ | 1Al$_2$O$_3$+8.5AlN | 25 |
| | 41 | 75.5 | 5Y$_2$O$_3$ | 1Al$_2$O$_3$+8.5AlN | 10 |
| Comparative Examples | 8 | 82 | 1Y$_2$O$_3$ | 1Al$_2$O$_3$+16AlN | |
| | 9 | 79 | 4CeO$_2$ | 1Al$_2$O$_3$+16AlN | |
| | 10 | 79 | 4Er$_2$O$_3$ | 1Al$_2$O$_3$+16AlN | |
| | 11 | 77 | 6Y$_2$O$_3$ | 1Al$_2$O$_3$+16AlN | |
| | 12 | 74 | 10Y$_2$O$_3$ | 1Al$_2$O$_3$+15AlN | |
| | 13 | 90.5 | 4Y$_2$O$_3$ | 0.5Al$_2$O$_3$+5AlN | |
| | 14 | 59.5 | 4Y$_2$O$_3$ | 3.5Al$_2$O$_3$+33AlN | |
| | 15 | 82 | 4Y$_2$O$_3$ | 5Al$_2$O$_3$+9AlN | |
| | 16 | 78.5 | 4Y$_2$O$_3$ | 0.5Al$_2$O$_3$+17AlN | |

21

Table 3 (2/2)

| | Run No. | α-value [%] | Z value | Dissolution proportion of sintering aid [%] | (a) |
|---|---|---|---|---|---|
| Working Examples | 24 | 27.1 | 0.32 | 30.1 | 10 |
| | 25 | 11 | 0.38 | 30.7 | 11 |
| | 26 | 23.2 | 0.38 | 42 | 13 |
| | 27 | 24.4 | 0.4 | 38.9 | 13 |
| | 28 | 24.5 | 0.45 | 43.5 | 14 |
| | 29 | 24.9 | 0.41 | 41.1 | 13 |
| | 30 | 22.5 | 0.39 | 50 | 16 |
| | 31 | 25.4 | 0.22 | 31.5 | 9 |
| | 32 | 26.4 | 0.7 | 34.8 | 20 |
| | 33 | 20 | 0.95 | 30.3 | 19 |
| | 34 | 10.3 | 0.44 | 33 | 9 |
| | 35 | 40 | 0.44 | 42.1 | 16 |
| | 36 | 21 | 0.97 | 30.2 | 13 |
| | 37 | 38.7 | 0.39 | 40 | 17 |
| | 38 | 12.1 | 0.38 | 39.5 | 11 |
| | 39 | 26 | 0.22 | 50 | 15 |
| | 40 | 24.4 | 0.22 | 32.2 | 11 |
| | 41 | 25.7 | 0.21 | 48 | 17 |
| Comparative Examples | 8 | Impossible to be densified | | | - |
| | 9 | 0 | 0.4 | 0 | 4 |
| | 10 | 17.7 | 0.41 | 21.2 | 5 |
| | 11 | 25.4 | 0.4 | 54.4 | (b) |
| | 12 | 23.5 | 0.4 | 60.9 | (c) |
| | 13 | 30.1 | 0.17 | 42.5 | 5 |
| | 14 | 14.4 | 1.1 | 24.1 | (d) |
| | 15 | 5.1 | 0.44 | 22.1 | 3 |
| | 16 | 45.8 | 0.42 | 54.1 | (e) |

(a) The number of cut workpieces that the cutter was able to cut [pieces]

(b), (e) The respective inserts chipped off after they finished cutting three workpieces.

(c) The insert chipped off after it finished cutting four workpieces.

(d) The insert chipped off while it was cutting the two workpieces.

As understood from Table 3, the inserts of Working Examples 24-41, which were inserts according to the present invention, were able to cut a large number, specifically 9 or more, of workpieces until the flank wear (VB) of the cutting edge of each tip reached 0.3 mm. Furthermore chipping-off of the respective cutting edges of the inserts made in the working exampleswasnotobserved. Ontheotherhand,thecuttersequipped with the inserts of the comparative examples, which did not satisfy the requirements of the present invention, were able to cut only five workpieces at most. Besides, there were inserts, the cutting edges of which chipped off, and pressed molds that could not be densified.

**Claims**

1. A Sialon insert made of a Sialon sintered body including a Sialon phase comprising an $\alpha$-Sialon and a $\beta$-Sialon, and at least one element, originating from a sintering aid, selected from the group consisting of Sc, Y, Dy, Yb, and Lu in an amount of 0.5 to 5 mol% in terms of an oxide thereof, wherein an $\alpha$-value, which shows the proportion of the $\alpha$-Sialon in the Sialon phase, is from 10% to 40%; the $\beta$-Sialon has a value of Z from 0.2 to 0.7 wherein Z is a variable of the formula $Si_{6-Z}Al_ZO_ZN_{8-Z}$ and within a range: $0<Z\leq4.2$; and the sintered body has an average thermal expansion coefficient of $3.5 \times 10^{-6}$/K or less at temperatures of room temperature to 1000°C, and a thermal conductivity of 10W/m□Kormore at temperatures of room temperature to 1000°C.

2. The Sialon insert according to claim 1, wherein the Sialon sintered body has a three-point bending strength of 1000 MPa or more at room temperature.

3. The Sialon insert according to claim 1 or 2, wherein the Sialon sintered body has a three-point bending strength of 900 MPa or more at a temperature of 1000°C.

4. A Sialon insert made of a Sialon sintered body including a grain boundary phase, the amount of which is such that the ratio of an area of the grain boundary phase in a section of the Sialon sintered body to an area of the section is from 5 to 20%, wherein an $\alpha$-value, which shows the proportion of an $\alpha$-Sialon in a Sialon phase, is 40% or less; a $\beta$-Sialon has a value of Z from 0.2 to 1.0 wherein Z is a variable of the formula $Si_{6-Z}Al_ZO_ZN_{8-Z}$; and the proportion of aluminum A included in the solid solution is 70% or more wherein the proportion A is defined by the formula [(a measured value of Z of the $\beta$-Sialon)/(a theoretical value of Z calculated from the composition of the sintered body)].

5. The Sialon insert according to claim 4, wherein the sintered body includes at least one element selected from the group consisting of Sc, Y, Ce, Er, Dy, Yb, and Lu in an amount of 0.5 to 10 mol% in terms of the oxides thereof.

6. The Sialon insert according to claim 4 or 5, wherein the sintered body includes at least one hard component selected from the group consisting of titanium carbide, titanium nitride, and titanium carbonitride in an amount of 30 mol% or less.

7. A Sialon insert made of a Sialon including a Sialon phase comprising an $\alpha$-Sialon phase and a $\beta$-Sialon phase, and a grain boundary phase that presents a glass phase and/or a crystal phase, wherein the $\beta$-Sialon phase, represented by the formula $Si_{6-Z}Al_ZO_ZN_{8-Z}$, has a value of Z from 0.2 to 1; an $\alpha$-value, which shows the proportion of the $\alpha$-Sialon phase in the Sialon phase, is from 10% to 40%; and the Sialon phase includes at least one rare earth element selected from the group consisting of Sc, Y, Dy, Yb, and Lu in a total amount of 2 to 5 mol% in terms of oxides thereof, and from 30 to 50 mol% of the rare earth element is present in the $\alpha$-Sialon phase.

8. The Sialon insert according to claim 7, wherein the Sialon phase includes at least one hard component selected from the group consisting of titanium carbide, titanium nitride, and titanium carbonitride in an amount of 30 mol% or less.

9. A cutting tool comprising a holder equipped with the Sialon insert according to any one of claims 1-8.

EP 1 837 105 A1

Fig. 1

Fig. 2

24

1'

Fig. 3

Fig. 4

Fig. 5

## INTERNATIONAL SEARCH REPORT

| | International application No. |
|---|---|
| | PCT/JP2005/023589 |

**A. CLASSIFICATION OF SUBJECT MATTER**
**B23B27/14**(2006.01), **B23C5/16**(2006.01), **C04B35/584**(2006.01), **C04B35/599** (2006.01)

According to International Patent Classification (IPC) or to both national classification and IPC

**B. FIELDS SEARCHED**

Minimum documentation searched (classification system followed by classification symbols)
**B23B27/14**(2006.01), **B23C5/16**(2006.01), **C04B35/584**(2006.01), **C04B35/599** (2006.01)

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-527434 A (Kennametal Inc.), 09 September, 2004 (09.09.04), Claims; Par. Nos. [0009], [0080] & WO 2002/044104 A2 & US 6693054 B1 & US 2004/0033883 A1 & US 2004/0102305 A1 & EP 1363861 A1 | 1-9 |
| A | JP 63-260869 A (NGK Spark Plug Co., Ltd.), 27 October, 1988 (27.10.88), Description, page 3, upper right column, line 15 to lower right column, line 2 & US 4946807 A | 1-9 |
| A | JP 06-100306 A (Toray Industries, Inc.), 12 April, 1994 (12.04.94), Claims; Par. No. [0003] (Family: none) | 1-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 March, 2006 (24.03.06) | 04 April, 2006 (04.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

| **INTERNATIONAL SEARCH REPORT** | International application No. |
|---|---|
| | PCT/JP2005/023589 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 06-305840 A (Kyocera Corp.), 01 November, 1994 (01.11.94), Claims; Par. Nos. [0019] to [0022] (Family: none) | 1-9 |
| A | JP 2002-263915 A (NGK Spark Plug Co., Ltd.), 17 September, 2002 (17.09.02), Claims (Family: none) | 2,3 |
| A | JP 2002-307208 A (NGK Spark Plug Co., Ltd.), 23 October, 2002 (23.10.02), Claims (Family: none) | 2,3 |
| A | JP 04-046062 A (Hitachi Metals, Ltd.), 17 February, 1992 (17.02.92), Description, page 4, upper left column, lines 9 to 16; tables 1, 2 (Family: none) | 2,3 |
| A | JP 10-029868 A (Honda Motor Co., Ltd.), 03 February, 1998 (03.02.98), Par. No. [0028] (Family: none) | 4 |
| A | JP 09-155415 A (Hitachi Metals, Ltd.), 17 June, 1997 (17.06.97), Par. Nos. [0010] to [0011] (Family: none) | 4 |
| A | JP 04-321562 A (Sumitomo Electric Industries, Ltd.), 11 November, 1992 (11.11.92), Par. No. [0022]; Fig. 1 (Family: none) | 4 |
| A | JP 2003-267787 A (Toshiba Tungaloy Co., Ltd.), 25 September, 2003 (25.09.03), Full text (Family: none) | 1-9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4323323 A
- JP 10036174 A
- JP 2824701 B
- JP 6510965 T
- JP 3266200 B
- JP 2275763 A
- JP 2004527434 A
- JP 3107168 B
- JP 2002192404 A
- JP 2002284589 A
- JP 11335168 A
- JP 2000143351 A
- US 5525134 A
- JP 2002192403 A
- WO 0244104 A